# EUROPEAN PATENT APPLICATION

(11) **EP 1 780 847 A2**
(43) Date of publication of application: **02.05.2007**
(21) Application number: 06012189.4
(22) Date of filing: 13.06.2006
(51) Int. Cl.: H01S 3/213, H01S 3/094

(54) **Enhancement of light emission of fluorescent dyes by the use of metal coated dielectric nanoparticles**

(30) Priority: 31.10.2005 US 264829
(71) Applicant: Agilent Technologies, Inc., Santa Clara, CA 95051 (US)
(72) Inventor: Siglas, Mihail M., Loveland, CO 80537-0599 (US); Ranganath, Tirumala R., Loveland, CO 80537-0599 (US)
(74) Representative: Zinkler, Franz

(57) **Abstract**

The efficiency of fluorescent dyes using dielectric nanospheres (150), half-covered with a metal coating (145) is improved. The funcionalized surface (410) is placed in a solution containing half metal coated dielectric nanospheres (150) prepared with appropiate antibodies (415) attached to the metal coating (145). Typically a second set of antibodies (435) may be attached to the exposed dielectric portion of the half metal coated dielectric nanospheres (150), which can then be positioned with their metal coating (145) adjacent to the functionalized surface (410), so that the exposed dielectric portion of the half metal coated dielectric nanospheres (150) is directed towards the pump light (450).

## Description

### Background

Fluorescent dyes are used for fluorescent tagging in bioimaging and biosensor applications. Photon absorption in dyes produces a fluorescence band that is typically red-shifted from the incident photon frequency. The difference in energy between the absorbed photon and the emitted photon corresponds to the energy loss due to nonradiative processes. Metal coated spheres containing dyes have been proposed for field enhancement in Raman spectroscopy by C. Oubre and P. Nordlander in Journal of Physical Chemistry B, 108, 17740 (2004).

### Summary of Invention

In accordance with the invention, the efficiency of fluorescent dyes or quantum dots using metal coated dielectric spheres or other metal coated dielectric shapes may be improved. Fluorescent dyes or quantum dots may be embedded in a dielectric volume of appropriate dimensions where typically half the surface of the dielectric volume is covered by a metal coating allow for increased absorption and emission efficiencies. Alternatively, fluorescent dyes or quantum dots may be attached to metal coated dielectric shapes using the appropriate chemistries.

### Brief Description of the Drawings

FIG. 1 shows an embodiment in accordance with the invention.
FIG. 2 shows the total radiated power ratio versus frequency in accordance with the invention.
FIG. 3 shows the total the total radiated power ratio versus frequency in accordance with the invention.
FIGs. 4a-b steps for a photochemical analytic sequence in accordance with the invention.
FIG. 5 shows an embodiment in accordance with the invention.

### Detailed Description

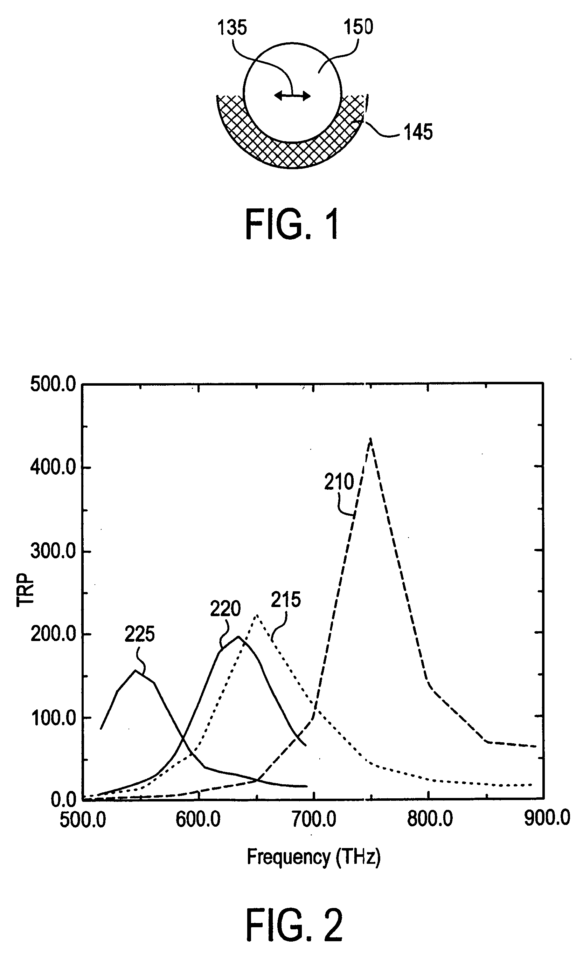

FIG. 1 shows an embodiment in accordance with the invention. Dielectric nanosphere 150 is typically fluorescent dye or quantum dot doped and shown with about half the surface of nanosphere 150 covered by metal coating 145, typically gold or silver. Typical diameters for nanosphere 150 in accordance with the invention are typically in the range from about 0.01 µm to about 5.0 µm. Dielectric nanosphere 150 may be a nanoparticle with a non-spherical shape such as an ellipsoid or other suitable shape.

FIG. 2 shows the calculated ratio of total radiated power (TRP) of a single dipole inside a metal coated dielectric nanosphere versus frequency in terahertz (THz). The TRP ratio shows the ratio of the TRP for the metal coated dielectric nanosphere to the TRP of a single dipole in air. Dielectric nanosphere 150 with a refractive index of 1.5 may be fully or half metal coated and immersed in air. The fluorescent dye or quantum dot doping is approximated by single dipole 135 at the center of dielectric sphere 150. A finite difference time domain (FDTD) is used for the calculations represented by the curves in FIGs. 2-3.

In FIG. 2, curves 210 and 215 correspond to dielectric nanosphere 150 having a diameter of about 25 nm with metal coating 145 having a thickness of 10 nm and 5.5 nm, respectively, and covering the entire surface of dielectric nanosphere 150. For curves 210 and 215 the TRP ratio maximum is at about 433 and about 222 at about 749 THz and about 650 THz, respectively. In FIG. 2, curves 220 and 225 correspond to correspond to dielectric nanosphere 150 with metal coating 145 having a thickness of 20 nm and 11 nm, respectively, and covering half the surface of dielectric nanosphere 150. For curves 220 and 225 the TRP ratio maximum is at about 197 and about 156 at about 634 THz and about 545 THz, respectively.

Metal coating 145 is a silver coating for curves 210, 215, 220 and 225. Metal coating 145 functions as a reflector and creates a resonant cavity so that the TRP ratio is a maximum at resonance. Increasing the thickness of metal coating improves the reflective properties to increase TRP ratio while increasing the resonance frequency as seen by curves 210 and 220. However, for thick metallic coatings 145 thicker than about 20 nm on fully metal coated dielectric nanospheres 150, the losses in metal coating 145 typically become dominant and TRP ratio decreases. Although the above curves 210, 215, 220 and 225 were calculated for spheres, similar enhancements of TRP ratio occur for other geometrical shapes such as, for example, partially or fully metal coated cubes or cylinders.

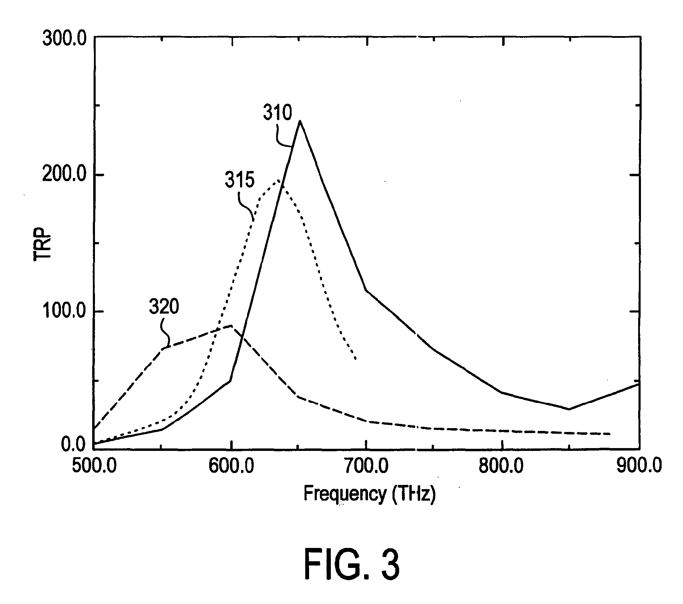

FIG. 3 shows the ratio of total radiated power (TRP) of a single dipole inside a metal coated dielectric nanosphere versus frequency in terahertz (THz). Dielectric nanosphere 150 with a refractive index of 1.5 is half metal coated and immersed in air. The dye or quantum dot doping is approximated by single dipole 135 at the center of dielectric sphere 150.

In FIG. 3, curves 310, 315 and 320 correspond to dielectric nanosphere 150 having diameters of about 19 nm, 25 nm and 38 nm, respectively, with metal coating 145 having a thickness of about 10 nm and being silver. For curves 310, 315 and 320 the TRP ratio maximum is at about 250, about 200 and about 90 at about 650 THz, about 625 THz and about 600 THz respectively. The resonance frequency and TRP ratio both decrease as the diameter of dielectric nanosphere 150 increases while keeping the thickness of metal coating 145 constant. It is expected that the resonance frequency will decrease as the diameter of nanosphere 150 increases. For a dipole on top of a flat metal plane, the TRP ratio increases by only about a factor of two for a given frequency that depends on the metal plane to dipole separation distance. Therefore, increasing the diameter of nanosphere 150 reduces the enhancement in the TRP ratio because increasing the diameter effectively increases the flatness of metal coating 145. From FIGs. 2 and 3 it can be concluded that the resonance frequency may be altered by changing the thickness of metal coating 145.

Calculations where both the diameter of nanosphere 150 and the thickness of metal coating 145 scale accordingly indicate that the resonance frequency stays about the same. This result is expected in view of the behavior shown in FIGs. 2 and 3 which show that the resonance frequency moves in opposite directions when only the diameter of nanosphere 150 increases and when only the thickness of metal coating 145 increases.

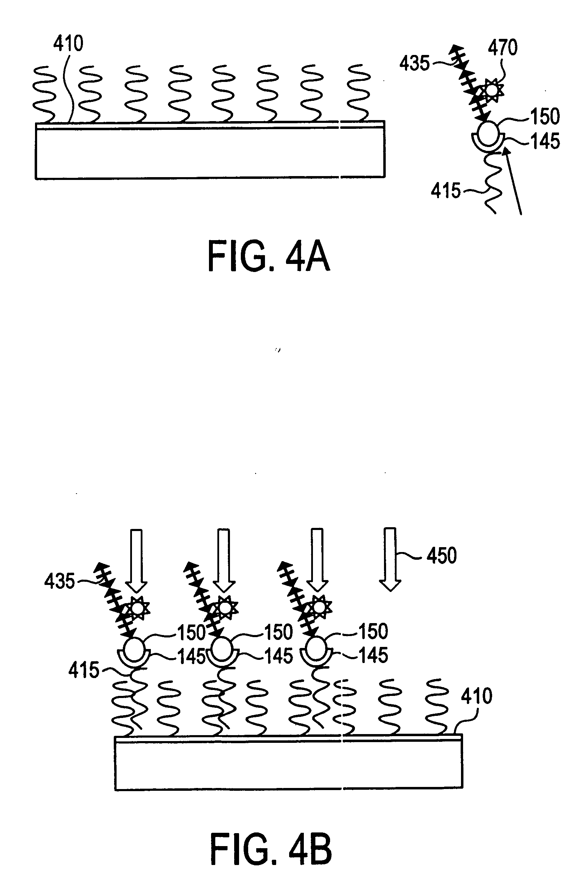

FIGs. 4a-4b show the steps for using half metal coated dielectric nanospheres 150 in a photochemical analytical sequence. Because dielectric nanospheres 150 are only half covered with metal coating 145, selective chemistry may be performed on the surface of dielectric nanosphere 150 and on the surface of metal coating 145 in order to orient metal coating 145 to a predetermined orientation to act as a receiving cup for the incoming pump light. The relevant literature provides the specific chemistries that have been developed for attaching bio-molecules to specific surfaces such as Au, Ag, SiO₂, polystyrene or latex. If a molecular entity that is sensitive to the specific emission wavelength of dielectric nanaosphere 150 is attached to dielectric nanosphere 150 other functions may be performed. The enhanced TRP ratio provided in accordance with the invention allows the efficient optical excitation of the molecular entity at very low concentrations which has applications in bio-sensing applications, for example.

Initially, functionalized surface 410 is placed in a solution containing half metal coated dielectric nanospheres 150. The half metal coated dielectric nanospheres 150 are prepared with appropriate antibodies 415 attached to metal coating 145. If metal coating 145 is gold, a thiol based chemistry that is complimentary to functionalized surface 410 is typically used. Typically, second set of antibodies 435 may be attached to the exposed dielectric portion of half metal coated dielectric nanospheres 150, second set of antibodies 435 is of relevance to the subsequent chemistry that is to be performed. Half metal coated dielectric nanospheres 150 can then be positioned with metal coating 145 adjacent to the functionalized surface 410 so that the exposed dielectric portion of half metal coated dielectric nanospheres 150 is directed towards pump light 450, attached antibodies 435 dangling radially. The procedure is performed with a variety of properly functionalized half metal coated dielectric nanospheres 150 tagged with appropriate dyes that each in turn will bind specific molecular entities 470 of interest. To perform an assay on a variety of tagged molecular entities 470, dye or quantum dot doped half metal coated dielectric nanospheres 150 are optically pumped at an appropriate wavelength to optically excite the appropriate dye or quantum dot doped half metal coated dielectric nanosphere or nanospheres 150. The wavelength is down shifted and re-emitted efficiently because of enhanced directionality. The efficient absorption of pump light 450 together with the highly directional and efficient re-emission of the light allows detection of molecular entities at very low concentrations. After half metal coated dielectric nanospheres 150 bind to the functionalized surface, half metal coated dielectric nanospheres 150 are typically exposed to light for photochemical analysis.

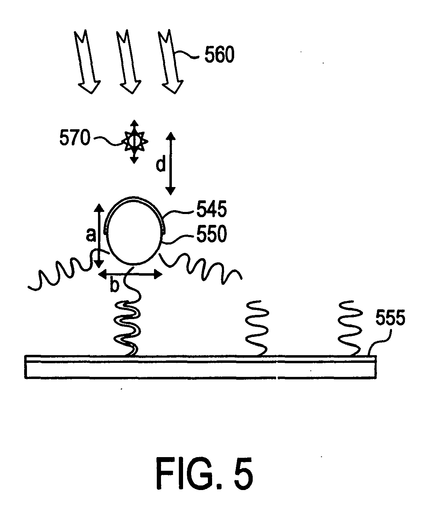

In addition to the geometry shown in FIGs. 4a-b, an alternative geometry and chemistry in accordance with the invention involves half metal coated dielectric nanoellipsoid 550 positioned with respect to substrate 555 such that metal coating 545 is directed toward pump light 560 as shown in FIG. 5. The exposed dielectric portion of half metal coated dielectric nanoparticle 550 is attached to functionalized surface 555. Work by Chew in the Journal of Chemical Physics, 87(2), 53234 (1987) and incorporated herein by reference shows that the radiative decay rate of fluorophore or quantum dot 570 placed along the axis of symmetry and a distance d typically about 2 to about 20 Angstroms from half metal coated dielectric nanoellipsoid 550 is enhanced by a factor of about 1000 for nanoellipsoid 550 with a ratio of major axis a to minor axis b having a ratio of about 1.5. This is about a factor of 10 better than for half metal coated dielectric nanosphere 150. The surface is oriented by using the property that only about half of dielectric nanoellipsoid 550 is metal coated and fluorophore or quantum dot 570 is attached as shown in FIG. 5. For small dielectric nanospheres 150 or nanospheres 550, the number of fluorophores or quantum dots 570 that can be attached is limited but because of the enhanced radiative rates there is enhanced fluorescence efficiency. The increase in radiative efficiency is about a factor of 1000 for nanoellipsoid 550 for a/b equal to about 1.5 while the improvement for nanospheres 150 in an analogous configuration is about a factor of 10.

Dye-doped dielectric nanospheres 150, typically of latex or polystyrene of various sizes are commercially available, for example, from MOLECULAR PROBES CORPORATION. Synthesis of dye-doped dielectric nanoparticles of silica using a micro-emulsion method is described by S. Santra et al in Journal of Biomedical Optics 6, 160-166 (2001) and incorporated herein by reference. The silica nanoparticles can be made in uniform sizes with typical diameters from a few nanometers to a few micrometers with the size distribution controlled to within about two percent.

In accordance with the invention, dye-doped dielectric nanospheres 150 may be replaced with quantum dot doped dielectric nanospheres 150. Unlike dye molecules, quantum dots absorb light at short wavelengths and the emission wavelength is determined primarily by the size of the quantum dots. This allows the absorption and emission wavelength to be further apart than for dye-doped dielectric nanospheres 150. This provides an extra degree of freedom in addition to the thickness of metal coating 145 in designing metal coated dielectric nanospheres 150. Because the emission and absorption processes are closely related, the absorption efficiency of the incident pump radiation may be increased resulting in an improvement in the emission efficiency.

Quantum dot, for example, ZnS-capped CdSe nanocrystals, doped dielectric nanospheres have been described by M. Han et al. in Nature Biotechnology, vol. 19, 631-635 (2001) and incorporated herein by reference. In particular, the dielectric material may be polystyrene or polymer. Doping by quantum dots is accomplished by swelling polystyrene nanospheres 150 in a solvent mixture containing 5 percent chloroform and 95 percent propanol or butanol and by then adding a controlled amount of ZnS-capped CdSe quantum dots. The doping process is typically complete in about 30 minutes at room temperature.

The first step in the metal coating process to make half metal coated doped dielectric nanospheres 150 is to disperse doped dielectric nanospheres 150 on a flat surface such as, for example, a glass slide. Polystyrene and latex nanospheres available from MOLECULAR PROBES CORPORATION are surfactant free and do not aggregate and are dispersed in a buffer fluid. Nanospheres of different sizes conjugated to biotin, avidin and streptavidin can be obtained from MOLECULAR PROBES CORPORATION. After spin coating and evaporation of the buffer fluid, the glass slide is coated with a monolayer of dielectric nanospheres 150. The glass slide is then introduced into a sputtering system. In order to improve metal adhesion which is especially important when using gold coatings, a layer of Ti or Cr is sputter deposited to a thickness in the range from about 2 nm to about 3 nm. This is followed by a sputter deposition of metal coating 145 to the desired thickness. Because the top half of dielectric nanospheres 150 block sputter deposition of the metal on the lower half of dielectric nanospheres 150, dielectric nanospheres 150 are typically half metal coated. Sputtering provides metal coating 145 with a high degree of metal uniformity. To achieve sufficient thickness for metal coating 145 on the sides it may be necessary to increase the metal thickness on the top. After the metal coating step, the glass slide is soaked in a suitable organic solvent, for example, propanol, to get half coated doped dielectric nanospheres 150 into solution for subsequent use. Ultra-sonification may be used if necessary to assist in removing half coated doped dielectric nanospheres 150 from the glass slide.

The attaching of metal specific molecules can be performed using molecules that have a terminal attaching group, for example thiol for gold, with a strong affinity to metal coating 145, 545 and a long linear alkyl chain that provides upright ordering on functionalized surface 410 or 555. Affinity to the solid surface is provided by a charge-transfer complex as in alkyl thiols on noble metals as described by Porter et al. in the Journal of the American Chemical Society, 109, 3559, (1987); Bain et al. in Angewandte Chemie, International Edition, 28, 506, (1989); and Nuzzo in the Journal of the American Chemical Society, 112, 558, (1990), all incorporated herein by reference.

For SiO₂, the affinity to dielectric portion of half metal coated dielectric nanospheres 150 or nanoparticle such as nanoellipsoid 550 is provided by a covalent chemical reaction, for example, silanes as described by Sagiv in the Journal of the American Chemical Society, 102, 92, 1980; Wasserman et al. in Langmuir, 5, 1074, (1989); and Ulman in Angewandte Chemie Advanced Materials, 2, 573, (1990), all incorporated by reference herein.

While the invention has been described in conjunction with specific embodiments, it is evident to those skilled in the art that many alternatives, modifications, and variations will be apparent in light of the foregoing description. Accordingly, the invention is intended to embrace all other such alternatives, modifications, and variations that fall within the spirit and scope of the appended claims.

## Claims

1. An edge emitting semiconductor laser (e.g. 100) comprising:
an active region (e.g. 118) having a first and a second side; and
a first-type upper cladding layer (e.g. 116) disposed on said first side of said active region (e.g. 118), said first-type upper cladding layer (e.g. 116) having periodic, second-type regions (e.g. 115) embedded therein.

2. The apparatus of Claim 1 wherein said periodic, second-type regions (e.g. 315) extend into said active region (e.g. 318).

3. The apparatus of Claim 1 wherein said edge emitting semiconductor laser (e.g. 100) is a quantum cascade laser.

4. The apparatus of Claim 1 wherein said second-type regions (e.g. 115) are p-type regions.

5. The apparatus of Claim 4 wherein said p-type regions (e.g. 115) are doped in the range from about 10¹⁶ / *cm*³ to about 10¹⁷ / *cm*³.

6. The apparatus of Claim 1 wherein said first-type cladding layer (e.g. 116) is an n-type cladding layer.

7. The apparatus of Claim 6 wherein said n-type cladding layer (e.g. 116) has a doping concentration in the range from 1×10¹⁶ /*cm³* to about 5×10¹⁷ /*cm*³.

8. The apparatus of Claim 1 further comprising a first electrode (e.g. 301) and a second electrode (e.g. 302), said first electrode disposed on said first side of said active region and said second electrode disposed on said second side of said active region (e.g. 318).

9. The apparatus of Claim 8 further comprising a third electrode (e.g. 303), said third electrode electrically (e.g. 303) coupled to said periodic, second -type regions (e.g. 325) .

10. The apparatus of Claim 1 wherein periodic, second type regions (e.g. 325) have a periodic spacing on the order of about 1 µm.

11. The apparatus of Claim 1 wherein said a first-type upper cladding layer (e.g. 116) comprises InP.

12. The apparatus of Claim 1 wherein said active region (e.g. 118) comprises AlInAs.

13. The structure of Claim 1 further comprising a first-type lower cladding layer (e.g. 317) and a first-type substrate (e.g. 320) disposed on said second side of said active region (e.g. 318), said first-type cladding layer (e.g. 317) disposed on said first-type substrate (e.g. 320).
